Europäisches Patentamt

European Patent Office

Office européen des brevets

(11) Publication number : **0 576 166 A2**

# EUROPEAN PATENT APPLICATION

(21) Application number : **93304348.1**

(51) Int. Cl.$^5$ : **C09D 183/04**

(22) Date of filing : **04.06.93**

(30) Priority : **08.06.92 US 895304**

(43) Date of publication of application :
**29.12.93 Bulletin 93/52**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **Gillette, Gregory Ronald**
**2 Dyer Drive**
**Clifton Park, New York 12065 (US)**
Inventor : **Trapp, Martin Arthur**
**19276 Northridge Drive**
**Northville, Michigan 48167 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) **Heat curable silicone hardcoat compositions.**

(57)    A heat curable silicone hardcoat composition is provided which utilizes an effective amount of a tetraalkyl ammonium fluoride as a curing catalyst in an aqueous/organic solvent dispersion of colloidal silica and a partial condensate of an organoalkoxysilane.

EP 0 576 166 A2

## Background of the Invention

The present invention relates to heat curable silicone hardcoat compositions comprising an aqueous/organic solvent dispersion of colloidal silica, a partial condensate of an organoalkoxy silane, and a tetraalkyl ammonium fluoride curing catalyst. More particularly, the present invention relates to thermoplastic substrates, such as polycarbonate sheets having improved abrasion resistance as a result of being treated with the heat curable silicone hardcoat composition.

Prior to the present invention, as shown by Clark, U.S. Patent 4,027,073, scratch resistant coatings such as a dispersion of colloidal silica in a lower aliphatic alcohol-water solution of the partial condensate of an organoalkoxy silane were provided where the coating composition had a pH in the range of about 3.0 to 6.0. In U.S. Patent 4,624,870, Anthony, a silica containing coating composition is described having an alkaline pH which is stabilized by the use of a volatile base. Patel U.S. Patent 4,914,143 and Factor et al, U.S. Patent 4,942,065, suggest that improved cure rates can be achieved by the employment of a curing catalyst, such as tetramethyl ammonium acetate or tetrabutyl ammonium acetate. Further improvements in cure rates of silicone hardcoat compositions are constantly being sought to provide higher production rates of thermoplastic composites having enhanced abrasion resistance and outdoor weatherability.

## Summary of the Invention

The present invention is based on the discovery that the incorporation of an effective amount of a tetraalkyl ammonium fluoride having the formula,

$$(R)_4N^+F^-, \qquad (1)$$

where R is a $C_{(2-4)}$ alkyl radical and preferably butyl, into an aqueous/organic solvent dispersion of colloidal silica and partial condensate of an organoalkoxy silane, has been found to enhance the cure speed of the resulting silicone hardcoat composition. In addition to enhancing the cure rate of the heat curable silicone hardcoat composition, the use of the tetraalkyl ammonium fluoride of formula (1) also provides cured silicone hardcoats having improved abrasion resistance as shown by Taber haze values at 500 cycles in accordance with ASTM D1003.

## Statement of the Invention

There is provided by the present invention, a heat curable silicone hardcoat composition comprising by weight, an aqueous/organic solvent dispersion comprising 10-50% of solids which consist essentially of 10-70% by weight of colloidal silica and 30-90% by weight of the partial condensate of an organoalkoxy silane having the formula,

$$(R^1)_aSi(OR^2)_{4-a} \qquad (2),$$

and an amount of a tetraalkyl ammonium fluoride of formula (1) which is effective as a curing catalyst, where $R^1$ is a $C_{(1-6)}$ monovalent hydrocarbon radical, $R^2$ is a member selected from hydrogen and $R^1$ and a is a whole number equal to 0 to 2 inclusive.

Some of the tetraalkyl ammonium fluorides which are included within formula (1) are for example, tetrabutyl ammonium fluoride, tetrapropyl ammonium fluoride and tetraethyl ammonium fluoride hydrate.

Alkyl alkoxy silanes within the scope of formula (2) which can be used in the practice of the present invention are preferably, methyltrimethoxysilane a partial condensate of methyltrihydroxysilane, and a mixture thereof.

Some of the aqueous/organic solvent dispersions of colloidal silica which can be used in the practice of the present invention are shown by Clark, U.S. Patent 3,986,997 which is incorporated herein by reference. These aqueous /organic solvent dispersions can be prepared by adding a trialkoxysilane, such as methyltrimethoxysilane to a commercially available aqueous dispersion of colloidal silica, such as Ludox HS of the E.I.duPont de Nemours and Company or Nalco 1034A of the Nalco Chemical Co. of Naperville, IL, which has been treated with glacial acetic acid to adjust the pH. After the addition of the methyltrimethoxysilane, the resulting acidified dispersion is allowed to stand for about 1 hour until the pH is stabilized at about 4.5. The resulting compositions can be aged for several days to insure formation of the partial condensate of methyltrimethoxysilane and the silica methanol-water dispersion. Another source of the aqueous/organic solvent dispersion of colloidal silica is shown by Ubersax , U.S. Patent 4,177,315 which utilizes a colloidal silica dispersion such as Ludox HS resulting from the hydrolysis of tetraethylorthosilicate by the addition of aliphatic alcohol and an acid. One of the preferred aqueous/organic solvent dispersion of colloidal silica can be made by initially mixing methyltrimethoxysilane and acetic acid thereafter adding Ludox, AS-40, the colloidal silica of the aforementioned Ubersax patent along with deionized water. The resulting mixture can then be agitated for 16 hours or more under ambient conditions during which time a suitable alcohol, such as isopropanol or butanol can be added. Additional hardcoat compositions which can be utilized in the practice of the present invention are shown by Anthony, U.S. Patent 4,624,870, incorporated herein by reference. These silicone hardcoat compositions can have an alkaline pH and comprise about 60% to 90% by weight of an alkyltrialkoxysilane and about 10% to about 40% by weight solids of colloidal silica in a water/organic solvent dispersion of ammonium stabilized colloidal silica. Preferably 70% to 80% by weight of an alkyl trialkoxysilane, such as methyltrimethoxysilane is used and about 20% to 30% by weight solids of the colloidal silica. The pH of the coating composition can be about 7.1 to about 7.8.

In the practice of the present invention, the heat curable silicone hardcoat compositions can be made by combining an effective amount of the tetraalkyl ammonium fluoride, or "curing catalyst" with the heat curable silicone hardcoat components. An effective amount of the curing catalyst of formula (1) is for example 0.01 to 1.0 part by weight of curing catalyst, per 100 parts by weight of heat curable silicone hardcoat composition.

UV (ultraviolet light) light absorbing agents which can be used in the heat curable hardcoat compositions are described by Ashby et al, U.S. Patents 4,278,804, 4,374,674, and 4,419,405, Frye, U.S. Patent 4,299,746 and Anthony, U.S. Patents 4,495,360 and 4,525,426 which are incorporated herein by reference, can be used. Additional UV absorbers are, for example, hydroxy benzophenone, benzotriazole, triazine cyanoacrylates and benzylidene malonates. Other additives, such as hindered amine light stabilizers, antioxidants, dyes, flow modifiers or surface lubricants also can be used.

Aromatic thermoplastic substrates which can be used in the practice of the present invention to make silicone hardcoat-aromatic thermoplastic substrate composites are preferably aromatic polycarbonates, such as Lexan polycarbonate of the General Electric Company. In addition, other aromatic thermoplastic substrates also can be used, such as blends of polyphenylene ether and polystyrene, polyetherimides, polyesters and polysulfones.

The heat curable silicone hardcoat composition can be applied onto the aromatic thermoplastic substrate by anyone of the well known methods such as spraying, dipping, roll coating and the like. It can be cured thermally or by infrared or microwave energy.

Thermoplastic composites made in accordance with the present invention, can be used in applications, such as windshields, lamp envelopes and safety glasses.

In order that those skilled in the art will be better able to practice the present invention, the following example is given by way of illustration and not by way of limitation. All parts are by weight.

Example

There was mixed 406 grams of methyltrimethoxysilane, 294 grams of Nalcoag 1034-A colloidal silica (34 weight percent $SiO_2$ in $H_2O$), 20 millimicron diameter particle size, pH=3.2), and 40 grams of deionized water. The mixture was agitated in a glass container which was immersed in cold water (about 15°C) for about 30 minutes. The mixture was then stirred for 16 to 18 hours at room temperature, followed by the addition of 740 grams of an equal parts blend of isopropanol/n-butanol 1:1 and 25.7 grams of the UV absorber 4-[gamma-(triethoxysilyl)-propoxyl]-2-hydroxylbenzophenone. The solution was allowed to age for 3 to 4 weeks. The resulting coating composition contained about 20% by weight solids, including about 8.5% by weight of the UV absorber. The pH of the mixture was 3±1.

A series of heat curable silicone hardcoat compositions was prepared by mixing the silicone hardcoat with a variety of catalysts at a concentration of 0.7 millimoles of catalyst per 100 grams of the silicone hardcoat mixture. The resulting heat curable silicone hardcoat formulation was then applied to bisphenol A polycarbonate plaques which had been previously primed with a thermosettable acrylic material, to a thickness of about 0.2-0.5 microns. After drying at room temperature for 10 minutes, the primed polycarbonate plaques were coated with the silicone hardcoat mixture and heated for 5 and 10 minutes at 130°C. The cure catalysts which were used in the silicone formulation are shown as follows:

Table I
Cure Catalyst Evaluation

## (Cure time: 5 and 10 minutes at 130°C)

| Catalyst Number | Catalyst Name (Abbreviation) |
|---|---|
| 1 | Sodium fluoride (NaF) |
| 2 | Tetramethyl ammonium formate (TMAFor) |
| 3 | Tetrabutyl ammonium fluoride (TBAFluor) |
| 4 | Tetramethyl ammonium bromide (TMABr) |
| 5 | Tetraethyl ammonium bromide (TEABr) |
| 6 | Tetrabutyl ammonium bromide (TBABr) |
| 7 | Tetraethyl ammonium perchlorate (TEAPChlor) |
| 8 | Tetrabutyl ammonium acetate (TBAA) |
| 9 | Tetramethyl ammonium hydroxide (TMAOH) |
| 10 | Tetrabutyl ammonium hydroxide (TBAOH) |
| 11 | Tetrabutyl ammonium tetraphenyl borate (TBATPB) |
| 12 | Tetrapropyl ammonium tetrafluoroborate (TPATFB) |
| 13 | Tetrapropyl ammonium bromide (TProABr) |
| 14 | Tetraethyl ammonium p-toulenesulfonate (TEApTS) |
| 15 | Tetramethyl ammonium fluoride tetrahydrate (TMAFluor) |
| 16 | Tetrapentyl ammonium bromide (TPenABr) |
| 17 | Tetraheptyl ammonium bromide (THepABr) |
| 18 | Tetrabutyl ammonium hexafluorophosphate (TBAHFPhos) |
| 19 | Tetraethyl ammonium fluoride hydrate (TEAFluor) |
| 20 | Tetrabutyl ammonium p-toluenesulfonate (TBApTS) |
| 21 | Tetrahexyl ammonium bromide (THexABr) |
| 22 | Tetrabutyl ammonium trifluoromethane sulfonate (TBATFMS) |

The degree of cure in the curable silicone hardcoat formulations was measured as abrasion resistance, using a combination of two ASTM test methods. The Taber Abrasion test ASTM D1044 was used with 1000 gram total weight evenly distributed on two wear wheels (type: CS-10F). An evaluation was made at 300 and 500 cycles. The second test method was ASTM D1003, where a Gardner Hazemeter, Model XL-800 was used. The following results were obtained:

Table II

| | Catalyst | Cure Time Minutes | % Haze at 300 Cycles | % Haze at 500 Cycles |
|---|---|---|---|---|
| 1. | NAF | 10 | 12.0 | |
| 2. | TMAFor | 5 | | 17.5 |
| 3. | TBAFluor | 10 | | 11.3 |
| 4. | TMABr | 10 | 9.0 | |
| 5. | TEABr | 10 | 10.0 | |
| 6. | TBABr | 5 | | 62.0 |
| 7. | TEAPChlor | 10 | 11.0 | |
| 8. | TBAA | 5 | | 14.0 |
| 10. | TBAOH | 5 | | 21.5 |
| 12. | TPATFB | 5 | | 40.8 |
| 13. | TProABr | 5 | | 46.6 |
| 14. | TEApTS | 5 | | 46.8 |
| 15. | TMAFluor | 5 | | 13.0 |
| 16. | TPenABr | 5 | | 48.2 |
| 17. | THepABr | 5 | | 46.3 |
| 18. | THBAHFPhos | 5 | | 46.0 |
| 19. | TEAFluor | 5 | | 11.3 |
| 20. | TBApTS | 5 | | 47.4 |
| 21. | THexABr | 5 | | 47.0 |
| 22. | TBATFMS | 5 | | 47.0 |
| | Control (no catalyst) | 5 | | 44.2 |

The above results show that catalysts 3, 15 and 19 which are within the scope of formula (1), provided the lowest haze values for a 5 minute cure time.

Although the above example is directed to only a few of the very many variables which can be used in the practice of the present invention, it should be understood that the present invention is directed to a much broader variety of heat curable silicone hardcoat compositions as shown in the description preceding this example.

## Claims

1. A heat curable silicone hardcoat composition comprising by weight, an aqueous/organic solvent dispersion comprising 10-50% of solids which consist essentially of 10-70% by weight of colloidal silica and 30-90% by weight of the partial condensate of an organoalkoxy silane having the formula,

$$(R^1)_aSi(OR^2)_{4-a},$$

and an amount of a tetraalkyl ammonium fluoride of formula,

$$(R)_4N^+F^-,$$

which is effective as a curing catalyst, where R is a $C_{(2-4)}$ alkyl radical, $R^1$ is a $C_{(1-6)}$ monovalent hydrocarbon radical, $R^2$ is a member selected from hydrogen and $R^1$ and a is a whole number equal to 0 to 2 inclusive.

2.   A heat curable silicone hardcoat composition in accordance with claim 1, where the tetraalkyl ammonium fluoride is a member selected from the class consisting of tetramethyl ammonium fluoride, tetraethyl ammonium fluoride and tetrabutyl ammonium fluoride.

3.   A silicone hardcoat composition in accordance with claim 1, where the organoalkoxysilane is methyltrimethoxysilane.

4.   A thermoplastic composite having improved abrasion resistance comprising a thermoplastic substrate which has been treated with a heat curable silicone hardcoat composition followed by the thermal cure of such heat curable silicone hardcoat composition comprising by weight, an aqueous/organic solvent dispersion comprising 10-50% by weight of solids which consist essentially of 10-70% by weight of colloidal silica and 30-90% by weight of the partial condensate of an organoalkoxy silane having the formula,
$$(R^1)_a Si(OR^2)_{4-a},$$
and an amount of a tetraalkyl ammonium fluoride of formula
$$(R)_4 N^+ F^-,$$
which is effective as a curing catalyst, where R is a $C_{(2-4)}$ alkyl radical, $R^1$ is a $C_{(1-6)}$ monovalent hydrocarbon radical, $R^2$ is a member selected from hydrogen and $R^1$ and a is a whole number equal to 0 to 2 inclusive.

5.   An abrasion resistant thermoplastic composite in accordance with claim 4, where the thermoplastic substrate is a polycarbonate substrate.